# EUROPEAN PATENT APPLICATION

(11) **EP 4 431 891 A1**
(43) Date of publication of application: **18.09.2024**
(21) Application number: 23162616.9
(22) Date of filing: 17.03.2023
(51) Int. Cl.: G01K 15/00, G01K 7/18, G01K 7/02, G01K 1/024

(54) **THERMOMETER WITH IMPROVED FAILURE SAFETY**

(71) Applicant: Endress+Hauser Wetzer GmbH+Co. KG, 87484 Nesselwang (DE)
(72) Inventor: Micieli, Andrea, 20052 Vignate (IT)
(74) Representative: Peguiron, Anke

(57) **Abstract**

The invention relates to a device for determining and/or monitoring the temperature (T) of a medium (M) comprising:
a first temperature sensor (1), a second temperature sensor (2), a first electronics unit (3) and a second electronics unit (4). The first temperature sensor (1) is electrically contacted with the first electronics unit (3) by means of the first connection lines (1a, 1b), and the second temperature sensor (2) is electrically contacted with the second electronics unit (4) by means of the second connection lines (2a, 2b).

According to the invention, the device comprises, first interconnecting lines (5a,5b), wherein the first temperature sensor (1) is also contacted with the second electronics unit (4) by means of the first interconnecting lines (5a,5b).

Furthermore, the invention relates to a method of operating the device according to the invention.

## Description

The invention relates to a device for determining and/or monitoring the temperature of a medium.

Thermometers are known from the prior art in a great variety of embodiments. Thus, there are thermometers which use the expansion of a liquid, a gas or a solid with a known coefficient of expansion, in order to measure temperature, or also others which relate the electrical conductivity of a material, or a quantity derived therefrom, to the temperature, such as electrical resistance when using, for example, resistance elements, or the thermoelectric effect in the case of thermocouples. On the other hand, radiation thermometers, in particular pyrometers, use the heat radiation of a substance to determine its temperature. The underlying measurement principles have each been described in a variety of publications.

In the case of a temperature sensor in the form of a resistance element, so-called thermistors (also referred to as PTC or NTC thermistors) have become known. PTC thermistors are particularly suitable since their resistance increases linearly to first order, as the temperature rises. Among the PTC thermistors, platinum is again a preferred material and widely used, since platinum exhibits an overall dependence of resistance on temperature that is at most quadratic. Resistance elements are typically designed to have a certain nominal resistance at a reference temperature of 0°C and are are commercially available under the designations as Pt10 (10 Ohm), Pt100 (100 Ohm) and Pt1000 (1 kOhm). The resistance element may be embodied as a so-called wound resistance thermometer or is embodied as a layer mounted on a substrate in thin- or thick film technology. In the case of a thin-film sensor, for example, a sensor element provided with connecting wires and mounted on a carrier substrate is used, wherein the back side of the carrier substrate usually has a metal coating.

In the case of temperature sensors in the form of thermocouples, however, the temperature is determined by a thermovoltage which arises between the unilaterally connected thermowires made of different materials. Thermocouples according to standard IEC 60584-x, e.g., thermocouples of the types R, S, B, J, T, E, K, N, C and A, are usually used as temperature sensors for temperature measurement. However, other pairs of materials, for example those with a measurable Seebeck effect, are also possible.

Frequently, the temperature sensor is part of a so-called measuring insert which comprises a casing element, which surrounds a filler and the temperature sensor embedded therein.

The measuring insert may be assembled in a protective tube, especially a metallic protective tube, for example a thermowell. The protective tube is closed, to protect the components of the thermometer, for example the measuring insert and/or the temperature sensor, against an environment to which the thermometer is exposed, e.g., a medium into which the thermometer is inserted.

The patent applications DE 10 2015 122 004 A1 and DE 199 39 757 A1 disclose a thermometer, wherein two temperature sensors are assembled in a common protective tube. The two temperature sensors are of equal or different species. In principle, the use of several temperature sensors increases the accuracy and reliability of the thermometer. For example, if one of the sensors fails, the other takes over. However, even when two or more temperature sensors are used, they are only often connected to a single electronics unit (also: temperature transmitter unit). Thus, damage on one of the circuits of said electronics unit leads to a complete loss of the entire thermometer.

It is therefore the object of the present invention to provide a thermometer having improved failure safety.

The object is achieved by a device for determining and/or monitoring the temperature of a medium and a method of operating a device according to the invention. Advantageous embodiments are respectively specified in the dependent claims.

Regarding the device, the object underlying the invention is achieved by a device for determining and/or monitoring the temperature of a medium, the device comprising:
a first temperature sensor, for detecting the temperature of the medium, and, especially at least two, first connection lines, for contacting the first temperature sensor,
a second temperature sensor, for detecting the temperature of the medium, and especially at least two, second connection lines for contacting the second temperature sensor,
a first electronics unit, for processing and/or forwarding at least a first measurement signal generated by the first temperature sensor,
a second electronics unit, for processing and/or forwarding at least a second measurement signal generated by the second temperature sensor,
wherein the first temperature sensor is electrically contacted with the first electronics unit by means of the first connection lines, and the second temperature sensor is electrically contacted with the second electronics unit by means of the second connection lines, wherein the device comprises, especially at least two, first interconnecting lines, and wherein the first temperature sensor is contacted with the second electronics unit by means of the first interconnecting lines.

Typically, the first and/or second temperature sensors are operated in the so-called two-wire, three-wire, four-wire etc. circuit, depending on the number of connecting lines used to connect the respective first or second temperature to the respective first or second electronics unit. At least two connecting lines are used to connect the respective temperature sensor to its electronics unit. The same holds for the first interconnecting lines. For example, the number of first interconnecting lines corresponds to the number of first connection lines.

The first and second temperature sensors are not limited to a particular type of sensing element. Thus, the invention includes, for example, the above-mentioned thermocouples and/or PTC or NTC thermistors or other temperature sensing elements which generate an electrical signal in response to a change of temperature known from the prior art.

The advantage of the device is that, in the event of a failure of the first electronics unit, the first temperature sensor is operable by the second electronics unit, by means of the first interconnecting lines, leading from the first temperature sensor to the second electronics unit.

In one embodiment of the device, the device comprises, especially at least two, second interconnecting lines, wherein the second temperature sensor is contacted with the first electronics unit by means of the second interconnecting lines.

Thus, in the event of a failure of the second electronics unit, the second temperature sensor is operable by the first electronics unit, by means of the second interconnecting lines, leading from the second temperature sensor to the first electronics unit. Also here, for example, the number of second interconnecting lines corresponds to the number of second connection lines.

Consequently, in this preferred embodiment, the thermometer is protected against a breakdown of either one of the first or the second electronics unit.

In one embodiment of the device, the first electronics unit and the second electronics unit are separately operable.

In one embodiment of the device, the first electronics comprises a first channel for the first temperature sensor and a second channel for the second temperature sensor, and the second electronics unit comprises a first channel for the first temperature sensor and a second channel for the second temperature sensor, wherein the first connection lines are leading from the first temperature sensor to the first channel of the first electronics unit, and wherein second connection lines are leading from the second temperature sensor to the second channel of the second electronics unit.

This means that for each of the first and second electronics units, measuring signals from the two different temperature sensors are attributed to and/or processed via separate channels. Of course, "first channel" and "second channel" according to the invention are arbitrary labels which may be used interchangeably.

In one embodiment of the device, the first channel and the second channel of the first electronics unit are independently operable, especially readable, independently from each other and/or the first channel and the second channel of the second electronics unit are independently operable, especially readable, independently from each other.

In one embodiment of the device, the first interconnecting lines are branched off the first connection lines in first branching points, and lead from the first branching points to the first channel of the second electronics unit and/or
wherein the second interconnecting lines are branched off the second connection lines in second branching points, and lead from the second branching points to the second channel of the first electronics unit.

In one embodiment of the device, the first temperature sensor and the second temperature sensor are arranged together in a thermowell.

In one embodiment of the device, the second temperature sensor is of a different type than the first temperature sensor.

In one embodiment of the device, the first electronics unit and the second electronics unit are arranged adjacent to each other.

In one embodiment of the device, the first electronics unit comprises a first inlet, for connecting a supply and/or communication link to the first electronics unit,
and
wherein the second electronics unit comprises a second inlet, for connecting a supply link and/or communication link to the second electronics unit,
and wherein the first inlet and the second inlet are separate from each other.

In this embodiment, the first inlet and second inlet are separate, to achieve complete independence of the two electronics units from each other.

Typically, during operation of the thermometer, the measured values picked up by thermometer are transferred from the first or second electronics unit via its respective communication link (also: communication infrastructure) to a superordinate control unit remote from the thermometer, for example, a PLC.

The communication link connectable to the inlet is for example embodied as a wired communication link, e.g., an analog measurement transmission link, especially according to the 4-20mA standard, or a wired fieldbus of automation technology, e.g., Foundation Fieldbus, Profibus PA, Profibus DP, HART, CANBus etc. The communication link can also be embodied to be part of a modern industrial communication network, e.g., an "Industrial Ethernet" field bus, in particular, Profinet, HART-IP or Ethernet/IP, a communication network known from the technical field of communication, e.g. Ethernet according to the TCP/IP protocol, or an Ethernet APL.

In this case, the respective inlet serves for connecting a supply and/or communication link to the respective electronics unit.

In addition, or alternatively, the communication link may serve as a power link to supply energy to the thermometer, needed to power the thermometer. If applicable, no power supply via a cable connection may needed, for example in case energy is provided by a local energy source of the device and/or an energy storage device of the device.

In case the communication link is embodied as a wireless communication link, for example: a Bluetooth, ZigBee, WLAN, GSM, LTE, UMTS communication network or also a wireless version of a fieldbus, especially 802.15.4 based standards like WirelessHART, the respective inlet serves uniquely for connecting a powering cable.

In one embodiment of the device, the device comprises a, especially bidirectional, communicating connection between the first electronics unit and the second electronics unit.

In one embodiment of the device, the first electronics unit and/or the second electronics unit comprise a communicating protocol, wherein the communicating protocol contains instructions to communicate between the first electronics unit and the second electronics unit via the communicating connection.

In one embodiment of the device, the first electronics unit and the second electronics unit are embodied to be operated in an active mode and a sleep mode,
wherein in the active mode, the respective first electronics unit or second electronics unit performs at least one of the following tasks:
   - processing and/or forwarding measured values for the temperature, wherein the measured values are captured by the first temperature sensor and/or by the second temperature sensor,
   - monitoring and/or checking the status of the device, especially the status of the first temperature sensor and/or the second temperature sensor;
and wherein in the sleep mode, the respective first electronics unit or second electronics unit is inactive, and does especially not perform any of the following tasks:
   - processing and/or forwarding measured values for the temperature, captured by the first temperature sensor and/or by the second temperature sensor,
   - monitoring and/or checking the status of the device, especially the status of the first temperature sensor and/or the second temperature sensor.

For example, when the first electronics unit or second electronics unit is in the sleep mode, its output is set to a neutral value (f. e. zero). Thus, when the first electronics unit or the second electronics unit is in the sleep mode, it does not interfere with measured values which are processed by the other electronics unit, i.e. the second electronics unit or he first electronics unit, in case the other electronics unit is an active mode. In addition, the electronics unit in sleep mode does not perform any of the typical tasks proper to the active electronics, such as processing and/or forwarding measured values and monitoring and/or checking the status of the device.

Regarding the method, the object underlying the invention is achieved by a method of operating a device according to the invention.

The method comprises the step of:
- Setting the first electronics unit to be operated either in the active mode or in the sleep mode,
wherein
- in case the first electronics unit is operated in the active mode, the second electronics unit is operated in the sleep mode and
- in case the first electronics unit is operate in the sleep mode, the second electronics unit is operated in the active mode.

Advantageously, at all times, only one of the two electronics units, is allowed to be in active mode.

In one embodiment of the method, the method comprises the step of:
- changing the operating mode of the first electronics unit from active mode to sleep mode and vice versa, preferably repeatedly.

In one embodiment of the method, in case the first electronics unit changes from being operated in the active mode to being operated in the sleep mode, the second electronics unit is prompted to simultaneously change from being operated in the sleep mode to being operated in the active mode, especially by passing a respective command to the second electronics unit via the communicating connection,
and
in case the first electronics unit changes from being operated in the sleep mode to being operated in the active mode, the second electronics unit is prompted to simultaneously change from being operated in the active mode to being operated in the sleep mode, especially by passing a respective command to the second electronics unit via the communicating connection.

In this embodiment, a change of the operating mode of one of the electronics units is synchronized. The synchronization is, for example, ensured via the aforementioned communication protocol sending instructions over the aforementioned communication link. Thus, the communicating protocol regulates the operativity of the electronics units and shall let operate only one electronics unit in active mode at a time regulates the operativity of all transmitters.

For example, the communicating protocol may be associated with (especially stored in a memory of) only a first one of the two electronics units. This electronics unit may serve as a so-called "Master Unit", wherein the other one of the two electronics units may serve as a so-called "Slave Unit".

The invention is explained in more detail with reference to the following figures, which are not to scale, where identical reference signs denote identical features. Where clarity so requires or it otherwise appears expedient, reference signs already mentioned are omitted in subsequent figures.

The following are shown:
Fig. 1: A schematic view of an embodiment of the device according to the invention;
Fig. 2: A diagram showing the synchronization of sleep and active mode of the first and second electronics unit in an embodiment of the method according to the invention.

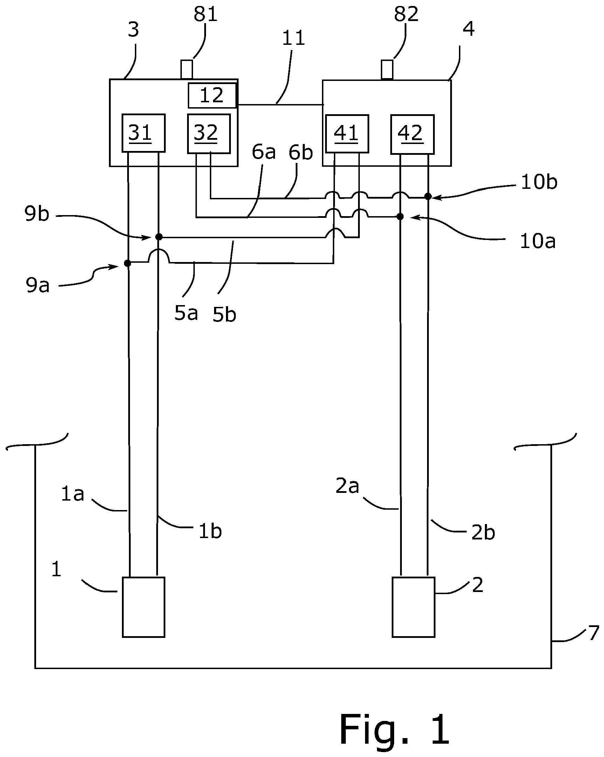

Fig. 1 shows an embodiment of the device according to the invention. A first temperature sensor 1 and a second temperature sensor 2 are assembled together in a protective tube 7 of a thermometer. If applicable, the thermometer comprises the measuring insert and fill material (not shown here) mentioned above.

The first temperature sensor 1 and second temperature sensor 2 are here both embodied as a so-called Pt100, but the invention encompasses all types of temperature elements, which may be of equal or different type. In the latter case, for example, the first temperature sensor 1 is embodied as a Pt100, and the second temperature sensor 2 as a thermocouple.

The first temperature sensor 1 is connected to a first electronics unit 3 by means of two first connection lines 1a,1b and thus operated in two-wire circuits and the second temperature sensor 2 is connected to a second electronics unit 4 by means of two second connection lines 2a,2b.

Both the first temperature sensor 1 and the second temperature sensor 2 are thus operated in a two-wire circuit, but of course, a three-, four-wire circuit etc. is also encompassed by the invention, as long as there are at least two first connection lines 1a, 1b and two second connection lines 2a,2b.

The first connection lines 1a,1b lead to a first channel 31 of the first electronics unit 3, and the second connection lines 2a,2b lead to a second channel 42 of second electronics unit 4.

Advantageously, the first temperature sensor 1 is also connected to the second electronics unit 4 via the first interconnecting lines 5a,5b. In this embodiment, this is achieved by branching off the first interconnecting lines 5a,5b from the first connection lines 1a, 1b in first branching points 9a,9b. Therefore, the number of first interconnecting lines 5a,5b corresponds to the number of first connection lines 1a, 1b. The first interconnecting lines 5a,5b lead to a first channel 41 of second electronics unit 4. Similarly, the second temperature sensor 2 is also connected to the first electronics unit 3 via the second interconnecting lines 6a,6b. They are branched off the second connection lines 2a,2b in the second branching points 10a,10b and lead to a second channel 32 of first electronics unit 3. Also here, the number of second interconnecting lines 6a,6b corresponds to the number of second connection lines 2a,2b.

Through a fitting (not shown), for example a process connection on a wall of a tube or a pipe, the first connection lines 1a, 1b, the second connection lines 2a,2b, the first interconnecting lines 5a,5b, and the second interconnecting lines 6a,6b enter the two electronics units 3, 4. The two electronics units 3, 4 are assembled into a transmitter housing (not shown) adjacent to each other, for example, through of means of locking devices The protective tube 7 is, for example, embodied as a metallic thermowell, which can have different process connections (e.g., flanged, threaded, weld-in, socket-weld, etc.). Additionally (not shown) the first temperature sensor 1 and second temperature sensor 2 can enter directly into the transmitter housing, without the need of any fitting accessory. In this case, the protective tube 7 is connected directly to the transmitter housing, or by means of dedicated accessory.

Advantageously, the first electronics unit 3 and the second electronics unit 4 are separately operable. This means that, for example, each of the first electronics unit 3 and second electronics unit 4 have their separate inlets 81,82, namely a first inlet 81 of the first electronics unit 3 and a second inlet 82 of the second electronics unit 4. Measured values picked up with the first temperature sensor 1 (via the first channel 31) and the second temperature sensor 2 (via the second channel 32) are transmitted by the first electronics unit 3, and/or status checks are preformed, even if the second electronics unit 4 experiences a failure (and vice versa). In principle, one of either the first electronics unit 3 or the second electronics unit 4 is redundant and can replace the other one in case of failure. In case of failure of one of the first electronics unit 3 or second electronics unit 4, measurement values for the temperature will still be received from both the first temperature sensor 1 and the second temperature sensor 2. Also, in case of failure of one of the electronics units 3, 4 measurement values and transmitted, for example to a superordinated unit via a communication link, as mentioned above. The communication link is, for example, connectable to the first inlet 81 and second inlet 82.

The device is equipped with an additional communicating connection 11 between the first electronics unit 3 and electronics unit 4. The first electronics unit 3 and/or the second electronics unit 4 comprise a communicating protocol 12 containing instructions to communicate between the first electronics unit 3 and the second electronics unit 4 via the communicating connection 11. The communicating protocol 12 has the function to synchronize operating modes of the first electronics unit 3 and the second electronics unit 4. For example, the communicating protocol 12 sets one of the electronics units 3, 4 as a so-called "Master-Unit" and the other one as a so-called "Slave-Unit". Typically, the communicating protocol 12 may be associated with, i.e., stored in a memory of, only one of the electronics units 3, 4.

Since the first temperature sensor 1 and the second temperature sensor 2 are connected to both electronics units 3, 4, the communicating protocol 12 shall let operate only one transmitter at a time. Typically, the electronics units 3, 4, other than processing the measured values picked up by the temperature sensors 1, 2, continue monitoring and controlling the status of the entire measuring chain. This may lead to an error if the first electronics unit 3 performs a reading of a measured value, while the second electronics unit 4 is performing any of these checking tests. Therefore, in an advantageous embodiment, at all times, only one of the electronics units 3, 4 is allowed to be operated in an active mode AM. In the active mode AM, the device performs one of the following tasks:
- processing and/or forwarding measured values for the temperature, wherein the measured values are captured by the first temperature sensor 1 and/or by the second temperature sensor 2,
- monitoring and/or checking the status of the device, especially the status of the first temperature sensor 1 and/or the second temperature sensor 2.

Whenever one of the electronics units 3, 4 is in the active mode AM, the other one is in a sleep mode SM. In the sleep mode SM, the respective first electronics unit 3 or second electronics unit 4 is inactive and acts as if it was switched off. Especially, it does not perform any of the following tasks associated with the active mode AM:
- processing and/or forwarding measured values for the temperature, captured by the first temperature sensor 1 and/or by the second temperature sensor 2,
- monitoring and/or checking the status of the device, especially the status of the first temperature sensor 1 and/or the second temperature sensor 2.

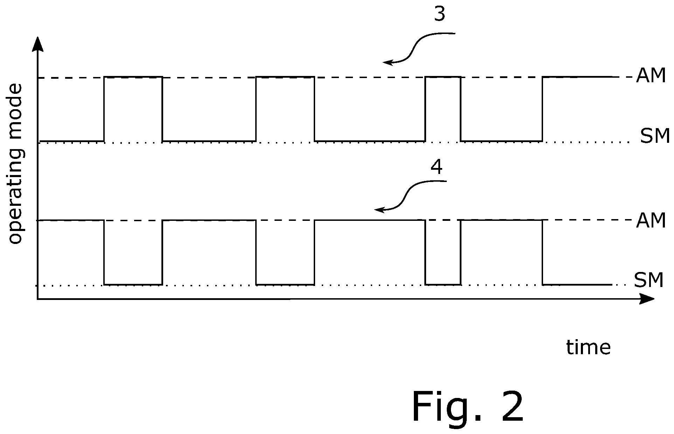

For example, when the first electronics unit 3 or second electronics unit 4 is in the sleep mode, its output is set to a neutral value (f. e. zero). Thus, an electronics unit 3, 4 in sleep mode SM does not interfere with measured values which are processed by the other electronics unit in active mode AM. In addition, the electronics unit in sleep mode does not perform any of the typical tasks proper to the active electronics, such as processing and/or forwarding measured values and monitoring and/or checking the status of the device. In summary, the communicating protocol 12 regulates the operativity of all electronics units 3, 4, to synchronize the operating modes AM, SM of the electronics units 3, 4. This is explained in more detail in connection with Fig. 2.

Fig. 2 shows in more detail the synchronization of sleep mode SM and active mode AM of the first electronics unit 3 and second electronics unit 4. The graph shows on the x-axis the time and on the y-axis the operation mode AM, SM for the first electronics unit 3 (top) and the second electronics unit 4 (bottom). Each of the electronics units 3, 4 is either operated in sleep mode SM (dotted line) or in active mode AM (dashed line). In this example, the first electronics unit 3 starts by being operated in the sleep mode SM and then switches to being operated in the active mode AM. The operation mode of the second electronics unit 4 is synchronized to the one of the first electronics unit 3, such that when the first electronics unit 3 is being operated in the active mode AM, the second electronics unit 4 is being operated in the sleep mode SM and vice versa. The operating mode may, at least at times, be changed via an active trigger and/or, at least at times, change after set time intervals, e.g., periodically.

### Reference Signs and Symbols

- 1: first temperature sensor
- 1a, 1b: first connection lines
- 2: second temperature sensor
- 2a,2b: second connection lines
- 3: first electronics unit
- 4: second electronics unit
- 5a,5b: first interconnecting lines
- 6a,6b: first interconnecting lines
- 31: first channel of first electronics unit
- 32: second channel of first electronics unit
- 41: first channel of second electronics unit
- 42: second channel of second electronics unit
- 5a, 5b: first interconnecting lines
- 6a, 6b: second interconnecting lines
- 7: protective tube
- 81,82: inlets
- 9a,9b: first branching points
- 10a,10b: second branching points
- 11: communicating connection
- 12: communication protocol

- T: temperature
- M: medium
- SM: sleep mode
- AM: active mode

## Claims

1. Device for determining and/or monitoring the temperature (T) of a medium (M) comprising:
a first temperature sensor (1), for detecting the temperature of the medium, and, especially at least two, first connection lines (1a, 1b), for contacting the first temperature sensor (1),
a second temperature sensor (2), for detecting the temperature of the medium, and especially at least two, second connection lines (2a, 2b) for contacting the second temperature sensor (2),
a first electronics unit (3), for processing and/or forwarding at least a first measurement signal generated by the first temperature sensor,
a second electronics unit (4), for processing and/or forwarding at least a second measurement signal generated by the second temperature sensor,
wherein the first temperature sensor (1) is electrically contacted with the first electronics unit (3) by means of the first connection lines (1a, 1b), and the second temperature sensor (2) is electrically contacted with the second electronics unit (4) by means of the second connection lines (2a, 2b),
wherein the device comprises, especially at least two, first interconnecting lines (5a,5b),
and wherein the first temperature sensor (1) is contacted with the second electronics unit (4) by means of the first interconnecting lines (5a,5b).

2. Device of claim 1, comprising:
wherein the device comprises, especially at least two, second interconnecting lines (6a,6b),
and wherein the second temperature sensor (2) is contacted with the first electronics unit (3) by means of the second interconnecting lines (6a,6b).

3. Device according to claim 1 or 2,
wherein the first electronics unit (3) and the second electronic (4) unit are separately operable.

4. Device according to at least one of the preceding claims,
wherein the first electronics unit (3) comprises a first channel (31) for the first temperature sensor (1) and a second channel (32) for the second temperature sensor (2),
and wherein the second electronics unit (4) comprises a first channel (41) for the first temperature sensor (1) and a second channel (42) for the second temperature sensor (2),
wherein the first connection lines (1a, 1b) are leading from the first temperature sensor (1) to the first channel (31) of the first electronics unit (3),
and wherein second connection lines (2a, 2b) are leading from the second temperature sensor (2) to the second channel (42) of the second electronics unit (4).

5. Device according to Claim 4,
wherein the first channel (31) and the second channel (32) of the first electronics unit (3) are independently operable, especially readable, independently from each other
and/or
wherein the first channel (41) and the second channel (42) of the second electronics unit (4) are independently operable, especially readable, independently from each other.

6. Device according to at least one of the preceding claims 4 to 5,
wherein the first interconnecting lines (5a,5b) are branched off the first connection lines (1a, 1b) in first branching points (9a,9b), and lead from the first branching points (9a,9b) to the first channel (41) of the second electronics unit (4)
and/or
wherein the second interconnecting lines (6a,6b) are branched off the second connection lines (2a,2b) in second branching points (10a,10b), and lead from the second branching points (10a,10b) to the second channel (32) of the first electronics unit (3).

7. Device according to at least one of the preceding claims,
wherein the first temperature sensor (1) and the second temperature sensor (2) are arranged together in a thermowell (7)

8. Device according to at least one of the preceding claims,
wherein the second temperature sensor (1) is of a different type than the first temperature sensor (2).

9. Device according to at least one of the preceding claims,
wherein the first electronics unit (3) and the second electronics unit (4) are arranged adjacent to each other.

10. Device according to at least one of the preceding claims,
wherein the first electronics unit (3) comprises a first inlet (81), for connecting a supply and/or communication link to the first electronics unit (3),
and
wherein the second electronics unit (4) comprises a second inlet (82), for connecting a supply link and/or communication link to the second electronics unit (4),
and wherein the first inlet (81) and the second inlet (82) are separate from each other.

11. Device according to at least one of the preceding claims,
comprising a, especially bidirectional, communicating connection (11) between the first electronics unit (3) and the second electronics unit (4).

12. Device according to at least one of the preceding claims,
Wherein the first electronics unit (3) and/or the second electronics unit (4)
comprise a communicating protocol (12), wherein the communicating protocol (12) contains instructions to communicate between the first electronics unit (3) and the second electronics unit (4) via the communicating connection (11).

13. Device according to at least one of the preceding claims,
wherein the first electronics unit (3) and the second electronics unit (4) are embodied to be operated in an active mode (AM) and a sleep mode (SM),
wherein in the active mode (AM), the respective first electronics unit (3) or second electronics unit (4) performs at least one of the following tasks:
- processing and/or forwarding measured values for the temperature, wherein the measured values are captured by the first temperature sensor (1) and/or by the second temperature sensor (2),
- monitoring and/or checking the status of the device, especially the status of the first temperature sensor (1) and/or the second temperature sensor (2);
and wherein in the sleep mode (SM), the respective first electronics unit (3) or second electronics unit (4) is inactive, and does especially not perform any of the following tasks:
- processing and/or forwarding measured values for the temperature, captured by the first temperature sensor (1) and/or by the second temperature sensor (2),
- monitoring and/or checking the status of the device, especially the status of the first temperature sensor (1) and/or the second temperature sensor (2).

14. Method of operating a device according to at least one of the preceding claims 1 to 13, the method comprising the step of:
- Setting the first electronics unit (3) to be operated either in the active mode (AM) or in the sleep mode (SM), wherein
- in case the first electronics unit (3) is operated in the active mode (AM), the second electronics unit (4) is operated in the sleep mode (SM) and
- in case the first electronics unit (3) is operate in the sleep mode (SM, the second electronics unit (4) is operated in the active mode (AM).

15. Method according to Claim 14, comprising the steps of:
- changing the operating mode (SM; AM) of the first electronics unit (3) from active mode (AM) to sleep mode (SM) and vice versa, preferably repeatedly.

16. Method according to Claim 14 or 15,
wherein in case the first electronics unit (3) changes from being operated in the active mode (AM) to being operated in the sleep mode (SM), the second electronics unit (4) is prompted to simultaneously change from being operated in the sleep mode (SM) to being operated in the active mode (AM), especially by passing a respective command to the second electronics unit (4) via the communicating connection (11);
and
wherein in case the first electronics unit (3) changes from being operated in the sleep (SM) mode to being operated in the active mode (AM), the second electronics unit (4) is prompted to simultaneously change from being operated in the active mode (AM) to being operated in the sleep mode (SM), especially by passing a respective command to the second electronics unit (4) via the communicating connection (11).
